# EUROPEAN PATENT SPECIFICATION

(11) **EP 4 227 465 B1**
(45) Date of publication and mention of the grant of the patent: **24.12.2025**
(21) Application number: 22206946.0
(22) Date of filing: 11.11.2022
(51) Int. Cl.: E02B 3/12, E02B 17/00

(54) **GRIDDED CEMENTED RIPRAP SCOUR-PROTECTION STRUCTURE**
GITTERFÖRMIGES, ZEMENTIERTES STEINSCHÜTTGUT ZUM SCHUTZ VOR KOLKBILDUNG
STRUCTURE DE PROTECTION CONTRE LES AFFOUILLEMENTS EN ENROCHEMENTS CIMENTÉS GRILLAGÉS

(30) Priority: 10.02.2022 CN 202210126149
(43) Date of publication of application: 16.08.2023
(73) Proprietor: China Three Gorges Co., Ltd., Wuhan Hubei 430010 (CN); China Three Gorges Renewables (Group) Co., Ltd., Beijing, Tongzhou District 100000 (CN); Tianjin Research Institute For Water Transport Engineering, M.O.T., Tianjin, Tanggu Binhai New Area 300456 (CN); Tsinghua University, Beijing 100084 (CN)
(72) Inventor: WANG, Wei, Wuhan 430010 (CN); YAN, Junyi, Wuhan 430010 (CN); TANG, Peng, Wuhan 430010 (CN); CHEN, Songgui, Wuhan 430010 (CN); JIN, Feng, Wuhan 430010 (CN); YU, Guangming, Wuhan 430010 (CN); ZHANG, Zechao, Wuhan 430010 (CN)
(74) Representative: Groth & Co. KB

(56) References cited:
- EP-A1- 0 753 628
- CN-A- 112 922 019
- CN-U- 209 397 587

## Description

### TECHNICAL FIELD

The present invention relates to the technical field of marine engineering infrastructure scour-protection, in particular to a gridded cemented riprap scour-protection structure.

### BACKGROUND

The ocean has abundant resources and is an important area for future development. Offshore wind power has the advantage of being clean and efficient and is an important part of new energy. An infrastructure of the offshore wind power is an important support structure for the development and utilization of wind energy resources, and is also an extremely important offshore building structure. The layout of offshore building structures will change a sea current field, resulting in the formation of local scour pits around the building structures, which in turn affects the bearing capacity of the offshore building structures, and seriously threatens the safety of operation of structures such as upper fans and the stability of the overall structure.

CN112 922 019 A discloses a single pile foundation and construction method for strengthening soft soil foundation with vibro-impact cemented piles for offshore wind power. This document can be regarded as useful to understand the invention.

At present, offshore building structures such as offshore wind power pile foundations and cylindrical foundations usually adopt protective measures such as riprap, sand quilt, solidified soil, and bionic aquatic plants. According to the monitoring results of the Jiangsu sea area in China, the existing protective measures are poor in scour-protection effect. Especially when the riprap protective measures are adopted, riprap around the offshore building structures will be washed away by a water flow, forming scour pits with a depth of being up to 8m around the foundations.

Therefore, there is an urgent need to propose a novel scour-protection structure for offshore building structures that is more excellent in scour-protection effect.

### SUMMARY

Therefore, the technical problem to be solved by the present invention is to overcome the defect of a poor scour-protection effect of the existing protective measures, thereby providing a gridded cemented riprap scour-protection structure with a stronger scour-protection ability formed at the peripheries of offshore building structures; and the scour-protection structure can also reduce the thickness and range of riprap around the offshore building structures, thereby reducing the comprehensive cost of anti-scouring protection.

The invention is defined by appended independent claims 1 and 9. Preferred embodiments of the invention follow from the dependent claims.

A gridded cemented riprap scour-protection structure, including:
riprap particles, uniformly distributed around the periphery of a building structure; and
a gelling substance, filled between the riprap particles for connecting some of the riprap particles into a whole from top to bottom to form cemented stalagmites; wherein
a plurality of the cemented stalagmites are formed around the building structure in a gridded distribution, and each cemented stalagmite has a structure with a smaller top and a larger bottom, and the riprap particles are at the peripheries of the cemented stalagmites.

Each cemented stalagmite is of a frustum-like shape in which a porosity thereof gradually decreases from top to bottom, or a gourd-like shape in which a porosity thereof gradually decreases and then increases and then decreases from top to bottom.

The above porosity in the present invention refers to the percentage of the volume of the corresponding pores in unit riprap particle accumulation to the total volume of the unit riprap particle accumulation.

The gridded distribution of the cemented stalagmites is arranged in at least two annular areas with the building structure as a center; and a plurality of the cemented stalagmites are distributed in each annular area.

The number of the annular areas in the gridded distribution is 2-5, and cemented stalagmites arranged in two adjacent annular areas are staggered or continuously aligned.

The distance between cemented stalagmites in an annular area closer to the building structure is less than or equal to the distance between cemented stalagmites in an annular area farther away from the building structure.

A filling ratio of the gelling substance at the top of each of the cemented stalagmites is 5-30%, and a filling ratio of the gelling substance at the bottom of each of the cemented stalagmites is 60-100%.

A filling ratio at the middle part of each of the cemented stalagmites is 30-60%.

The above filling ratio refers to the percentage of the volume occupied by the corresponding gelling substance in unit rubble particle accumulation to the total volume of the pores before the gelling substance is filled in the unit rubble particle accumulation.

The riprap particles have a particle size of 50-500mm.

The gelling substance is formed after an underwater cementing material flows, adheres and coagulates along the gaps between the riprap particles under the action of self-gravity.

The underwater cementing material is self-compacting early-strength concrete, underwater self-compacting early-strength mortar or underwater self-compacting early-strength paste, and the fluidity and strength characteristics of the underwater cementing material are early-strength and retarding.

The technical solution of the present invention has the following advantages:
1. the gridded cemented riprap scour-protection structure provided by the present invention is composed of the cemented stalagmites and the riprap particles surrounding the cemented stalagmites, wherein the cemented stalagmites, as a core structure, play a rigid skeleton support role, effectively resisting the scouring of a wave water flow, and ensuring the stability of the surrounding riprap particles; as an auxiliary structure, the riprap particles play the role of flexible muscle tissue and can adapt to their own structural deformation and foundation deformation; and the cemented stalagmites allow the surrounding riprap particles to move in a small range, but limit the movement in a large range, which ensures the continuity and transition of the stiffness of the gridded cemented riprap scour-protection structure and foundation soil, avoids the scouring of the peripheral foundation soil by the gridded cemented riprap scour-protection structure caused by a large difference in stiffness between the two, and achieves the purpose of improving the scour-protection ability.
2. The scour-protection structure provided by the present invention can make full use of the simplicity and maturity of the riprapping technology and the existing construction ships, and realize gridded cemented riprapping through a self-flow and controllable pouring process of the underwater cementing material. The protective structure with a stronger scour-protection ability is formed at the peripheries of the offshore building structures, and can improve the scour-protection ability of the original riprap accumulation, thereby reducing the thickness and range of riprap around the offshore building structures, reducing the use amount of riprap, thereby reducing the comprehensive cost of anti-scouring protection; and according to the results of a large-scale wave flume scour test carried out by the inventor, compared with a traditional riprap protection method, the gridded cemented riprap scour-protection structure reduces the thickness and accumulation range of riprap accumulation by 50% or more, respectively, and reduces the depth and range of the scour pits by 80%-95%.
3. The present invention can effectively change the scour-protection characteristics by controlling the internal structural features of the gridded cemented riprap scour-protection structure, such as the gridded arrangement of the cemented stalagmites, the filling ratio of the gelling substance, and the porosity of the cemented stalagmites, thereby improving the applicability to different sea areas and expanding the applicability range.
4. The gridded cemented riprap scour-protection structure of the present invention effectively breaks through the limitations of the existing riprap particle size of 100-350 mm and the riprap quality, facilitates selection of riprap materials on site, even with waste building material, slag and tailing enrockment, which effectively expands the source of raw materials, greatly facilitates the construction, and reduces the construction cost.

### BRIEF DESCRIPTION OF THE DRAWINGS

In order to more clearly explain the specific embodiments of the present invention or the technical solution in the prior art, the drawings that need to be used in the description of the specific embodiments or the prior art will be briefly introduced below. Obviously, the drawings in the following description are some embodiments of the present invention. For those of ordinary skill in the art, other drawings can also be obtained based on these drawings without creative labor.
Fig. 1 is a top view of a gridded cemented riprap scour-protection structure according to the present invention;
Fig. 2 is a structural schematic diagram of a gridded distribution of cemented stalagmites according to the present invention;
Fig. 3 is a structural schematic diagram of a three-dimensional spatial arrangement of cemented stalagmites according to the present invention;
Fig. 4 is a schematic diagram of a cross-sectional structure of cemented stalagmites with different outer contours in the vertical direction according to the present invention;
Fig. 5 is a schematic diagram of a gridded cemented riprap scour-protection structure disposed on a first offshore building structure;
Fig. 6 is a schematic diagram of a gridded cemented riprap scour-protection structure disposed on a second offshore building structure; and
Fig. 7 is a schematic diagram of a gridded cemented riprap scour-protection structure disposed on a third offshore building structure.

### Description of reference signs:

2-building structure; and
11-cemented stalagmite, 12-riprap particle, 13-gelling substance.

### DETAILED DESCRIPTION

The technical solutions of the present invention will be clearly and completely described below with reference to the accompanying drawings.

In the description of the present invention, it should be noted that, the terms "center", "upper", "lower", "vertical", "horizontal", "inside", "outside", and the like indicate an orientation or position relationship based on the orientation or position relationship shown in the drawings, which is only for the convenience of describing the present invention and simplifying the present description, rather than indicating or implying that the device or element referred to must have a specific orientation, be constructed and operated in a specific orientation, and therefore cannot be understood as a limitation of the present invention. In addition, the terms "first", "second", and "third" are used for descriptive purposes only and should not be construed as indicating or implying relative importance.

In the description of the present invention, it should be noted that, unless otherwise expressly specified and defined, the terms "connected" and "connection" should be understood in a broad sense, for example, it may be a fixed connection, a detachable connection, or an integral connection; it may be a mechanical connection; it may be a direct connection, it can also be indirect connection through an intermediate medium, and it can be an internal communication of two components. For those of ordinary skill in the art, the specific meanings of the above terms in the present invention can be understood in specific situations.

### Embodiment 1

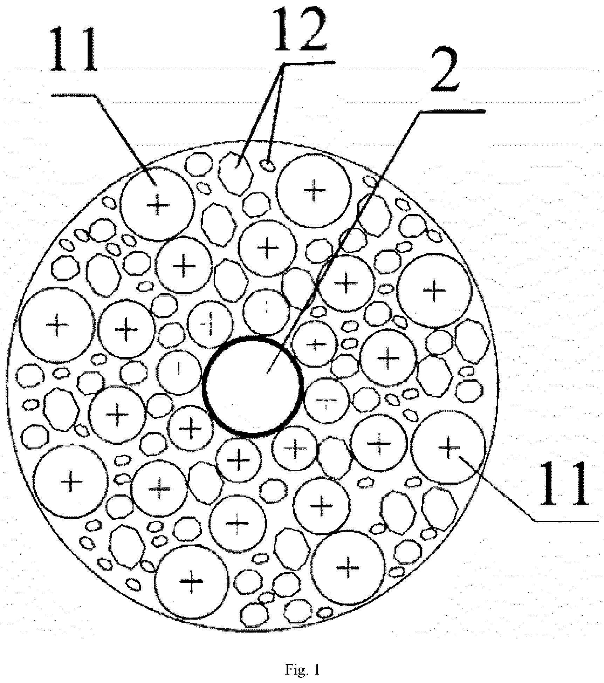

A gridded cemented riprap scour-protection structure, as shown in Figs. 1-3, includes: riprap particles 12, uniformly distributed around the periphery of a building structure 2; and a gelling substance 13 filled between the riprap particles 12 for connecting some of the riprap particles 12 into a whole from top to bottom to form cemented stalagmites 11; wherein a plurality of the cemented stalagmites 11 are formed around the building structure 2 in a gridded distribution, and each cemented stalagmite 11 has a structure with a smaller top and a larger bottom, and the peripheries of the cemented stalagmites 11 are surrounded by the riprap particles 12.

The gridded cemented riprap scour-protection structure provided by the present invention is composed of the cemented stalagmites 11 and the riprap particles 12 surrounding the cemented stalagmites 11, wherein the cemented stalagmites 11, as a core structure, play a rigid skeleton support role, effectively resisting the scouring of a wave water flow, and ensuring the stability of the surrounding riprap particles 12; as an auxiliary structure, the riprap particles 12 play the role of flexible muscle tissue and can adapt to their own structural deformation and foundation deformation; and the cemented stalagmites 11 allow the surrounding riprap particles 12 to move in a small range, but limit the movement in a large range, which ensures the continuity and transition of the stiffness of the gridded cemented riprap scour-protection structure and foundation soil, avoids the scouring of the peripheral foundation soil by the gridded cemented riprap scour-protection structure caused by a large difference in stiffness between the two, and achieves the purpose of improving the scour-protection ability.

In the present invention, according to the specific spatial structure of the cemented stalagmites 11 and the expected protective effect, the periphery of the building structure 2 can be divided into a plurality of grid units, and each grid unit has the cemented stalagmites 11 of different structures and the riprap particles 12 that are distributed between the cemented stalagmites 11; and through the differentiated setting of the grid cells, the refined structure design is realized, and the economy and efficiency ratio are improved.

Wherein each cemented stalagmite 11 is of an integrated structure formed by filling the riprap particles 12 with the gelling substance 13 to fix two adjacent riprap particles 12; and it can be understood that the gelling substance 13 is formed after a cementing material is solidified. The cemented stalagmites 11 can be realized in a variety of ways, which can be formed by mixing the cementing material with the riprap particles 12 in a specific ratio to form a specific shape, and solidifying; and can also be formed by pouring an underwater cementing material, wherein the gaps between a plurality of the riprap particles 12 in the vertical direction are filled under the action of self-gravity of the underwater cementing material, and solidifing is performed to form integrated cemented stalagmites 11.

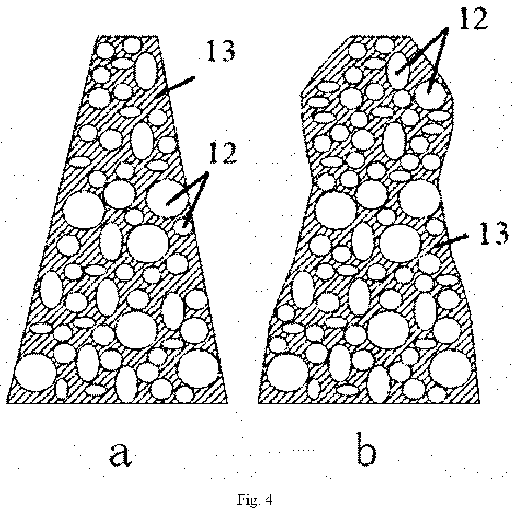

The cemented stalagmites 11 in this embodiment are formed by pouring the underwater cementing material. Specifically, the underwater cementing material first flows downward under the action of gravity, and then diffuses laterally, thus forming a frustum-like shape in which a porosity thereof gradually decreases from top to bottom; and when the underwater cementing material is poured in multiple times, the previous pouring process changes the original gap structure of riprap accumulation, causing more underwater cementing materials to fill upper gaps and spread laterally, thus finally forming a gourd-like structure in which a porosity thereof gradually decreases and then increases and then decreases from top to bottom. Wherein a cross section of each cemented stalagmite 11 of which an outer contour shape is a frustum-like shape or a gourd-like shape in the vertical direction is shown in Fig. 4, wherein a is a sectional view of the frustum-like shape in the vertical direction, and b is a sectional view of the gourd-like shape in the vertical direction.

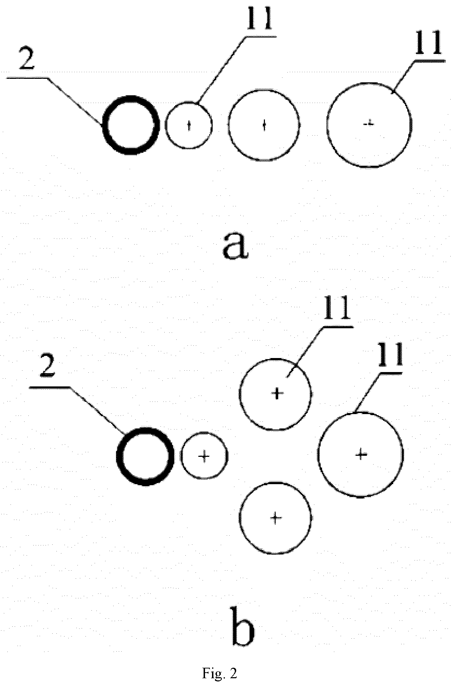

Wherein the gridded distribution of the cemented stalagmites 11 is arranged in at least two annular areas with the building structure 2 as a center; and a plurality of the cemented stalagmites 11 are distributed in each annular area, as shown in Figs. 1 and 2. The number of the annular areas in the gridded distribution is preferably 2-5, more preferably 2-3, for example, the cemented stalagmites 11 are divided into an inner ring and an outer ring, or an inner ring, a middle ring and an outer ring according to the structural characteristics of the offshore building structure 2.

Specifically, in this embodiment, according to the spatial structure and size, the number of the annular areas in the gridded cemented riprap scour-protection structure is set to be three, which are an inner ring, a middle ring and an outer ring from inside to outside, as shown in Fig. 1. In this arrangement, cemented stalagmites 11 arranged in two adjacent annular areas are staggered or continuously aligned, as shown in Fig. 2, and in Fig. 2, a is a schematic diagram of a continuous alignment of cemented stalagmites 11 arranged in two adjacent annular areas, and b is a schematic diagram of a staggered arrangement of cemented stalagmites 11 arranged in two adjacent annular areas.

In general, the structural strength of the cemented stalagmites 11 in the inner ring needs to be higher than that of the outer side, and the number also needs to be more than that of the outer side. This is because the cemented stalagmites in the inner ring are closer to the building structure 2, and directly bear the sea current scouring effect caused by the building structure 2. For this reason, in this embodiment, the distance between cemented stalagmites 11 in an annular area closer to the building structure 2 is less than or equal to the distance between cemented stalagmites 11 in an annular area farther away from the building structure 2, as shown in Fig. 1.

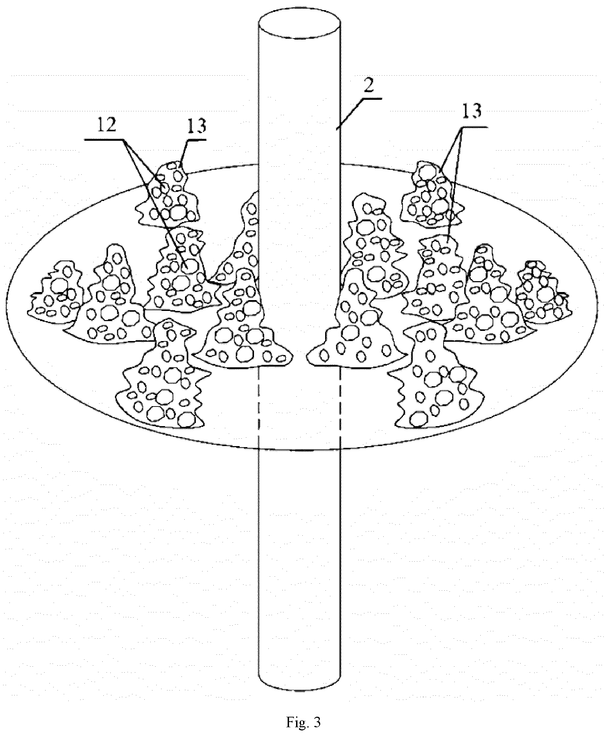

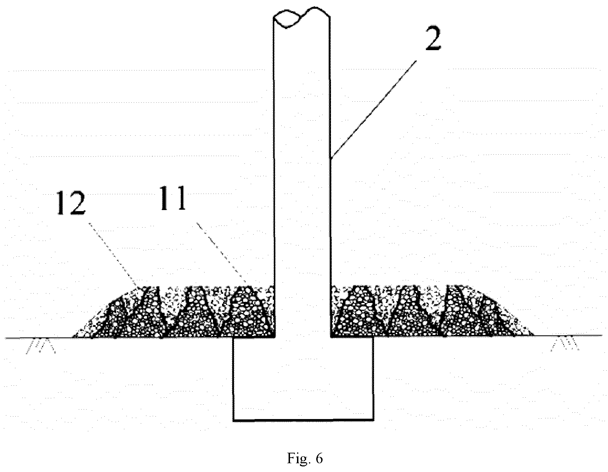

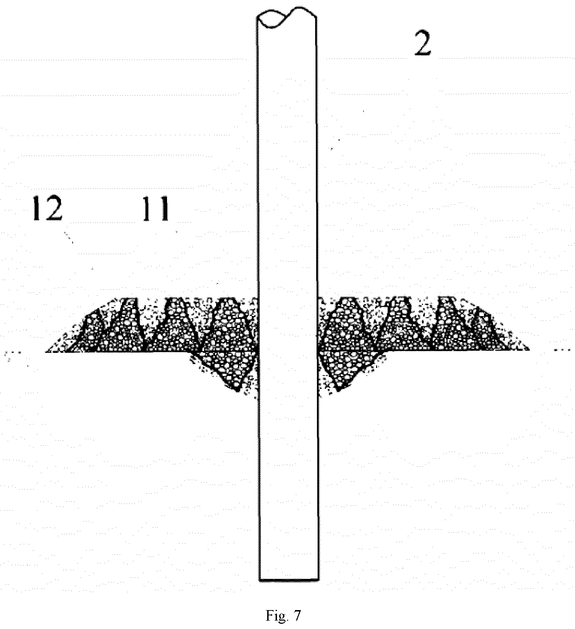

At the same time, the present invention also optimizes a filling ratio of the gelling substance 13 at each position in the vertical direction of the cemented stalagmites 11; in the gridded cemented riprap scour-protection structure, when the outer contour of each of the cemented stalagmites 11 has a frustum-like structure, preferably, a filling ratio of the gelling substance 13 at the top of each of the cemented stalagmites 11 is 5-30%, a filling ratio of the gelling substance 13 at the bottom of each of the cemented stalagmites 11 is 60-100%, and a filling ratio of the gelling substance 13 at the middle part of each of the cemented stalagmites 11 is 30-60%; and when the outer contour of each of the cemented stalagmites 11 has a gourd-like structure, the porosity of each of the cemented stalagmites 11 gradually decreases and then increases and then decreases from top to bottom, that is, the porosity of the middle part of each cemented stalagmite 11 is higher than the porosity of the upper part and the porosity of the lower part, or the filling ratio of the upper part and the filling ratio of the lower part of each cemented stalagmite 11 are higher than that of the middle part, as shown in Fig. 3 and Figs. 5-7.

Specifically, in this embodiment, the cemented stalagmites 11 are obtained after the underwater cementing material flows, adheres and coagulates in the riprap accumulation. The underwater cementing material first flows downward under the action of gravity, and then spreads laterally along the riprap gaps, therefore, when pouring points between adjacent cemented stalagmites 11 are far away, the middle upper parts of the formed cemented stalagmites 11 are not in direct contact, and when the single-point pouring amount is sufficient, the underwater cementing material will spread laterally at the interface between cemented riprap and the foundation, and the distance between the lower or bottom parts of adjacent cemented stalagmites 11 is smaller or even connected. That is, in the present invention, the middle upper parts of the cemented stalagmites 11 are not in direct contact with the adjacent cemented stalagmites 11, and the lower or bottom parts of the cemented stalagmites 11 are connected with the adjacent cemented stalagmites 11, which can effectively protect foundation soil under the grid cemented riprap scour-protection structure from being scoured.

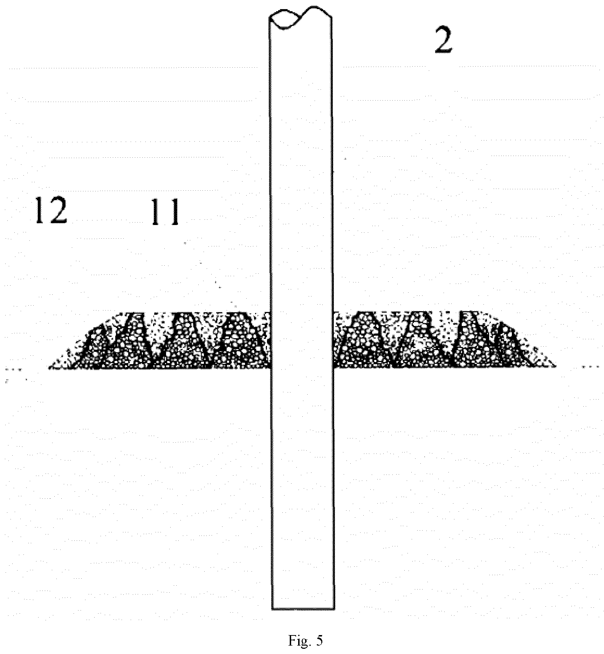

The gridded cemented riprap scour-protection structure of the present invention can be applied to different offshore building structures, particularly as shown in Figs. 5-7. At the same time, the particle size of the riprap particles 12 in the present invention may be selected to be 50-500 mm, and the underwater cementing material may be commercially available underwater self-compacting early-strength concrete (e.g. early-strength retarding self-compacting concrete from Beijing Huashi Nagu Technology Co., Ltd.), underwater self-compacting early-strength mortar (e.g. early-strength retarding self-compacting mortar from Beijing Huashi Nagu Technology Co., Ltd.) or underwater self-compacting early-strength paste (e.g. early-strength retarding paste from Beijing Huashi Nagu Technology Co., Ltd.). At the same time, the underwater cementing material may be homemade, for example, the self-compacting early-strength mortar is directly prepared by a conventional cement mortar preparation process by using 42.5 ordinary Portland cement, medium sand of a concrete mixing plant, stone with a particle size of 5-20 mm, a special admixture for underwater super early-strength self-protecting concrete produced by Beijing Huashi Nagu Company, a underwater protective agent produced by Beijing Huashi Nagu Company, and other materials such as water and a retarder. Whether purchased or homemade, it is only necessary to ensure that the strength of the cemented stalagmites is not less than 1MPa after 6h of pouring. In order to meet the pouring requirement of the underwater cementing material, the slump flow of the underwater self-compacting early-strength concrete is 600-800mm, the slump flow of the underwater self-compacting early-strength mortar and the underwater self-compacting early-strength paste is 260-320mm, and the plasticity retention time of the underwater cementing material is 30-120min.

The scour-protection effect of the gridded cemented riprap scour-protection structure offshore is studied by a large-scale wave flume test based on a certain offshore wind farm in Jiangsu, wherein the pile diameter prototype value is 6.5 m, the particle size of the riprap is 150-350 mm, the height of the riprap accumulation is 1m, a protection radius is 15m, and topsoil is silt.

In a model test, the structure and the particle size of surrounding riprap are proportionally reduced, specifically, in the model, the pile diameter is 0.5 m, the particle size of the riprap is 11.5-23 mm, the height of the riprap accumulation is 0.04 m, a protection radius is 0.75 m, topsoil is silt, the gridded cemented riprap scour-protection structure is formed by pouring underwater self-compacting early-strength mortar, and the single-point pouring amount is 5L, wherein the slump flow of the mortar is 320±10 mm, the plasticity retention time is 30 min, the onshore strength and underwater strength of a mortar specimen in 6h are 3 MPa and 1.2 MPa, respectively, and the underwater strength of a cemented stalagmite specimen in 6h is 1.8 MPa.

The test simulates a once-in-50-year extreme condition with a wave height of 9.01m, a period of 10.3s and a flow rate of 1.34m/s and a once-in-a-century extreme condition with a wave height of 11.44m, a period of 13.4s and a flow rate of 1.34m/s, and the maximum scouring depth is reduced from 4.42 m to 0.72 m under the once-in-50-year extreme condition, and the maximum scouring depth is reduced from 6.5 m to 1.16 m under the once-in-a-century extreme condition after the gridded cemented riprap scour-protection structure of the present invention is adopted for protection.

Moreover, compared with the original size parameters of the riprap accumulation, the thickness and protection radius of the riprap accumulation in the gridded cemented riprap scour-protection structure are only half of the original size parameters, that is, the use amount of riprap is only 25.6% of the original use amount, which greatly saves the use amount of riprap particle raw materials.

Obviously, the above embodiment is only an example for clear description, and is not intended to limit the embodiments. For those of ordinary skill in the art, changes or modifications in other different forms can also be made on the basis of the above description. There is no need and cannot be exhaustive of all the embodiments here. The invention is defined by the appended claims.

## Claims

1. A gridded cemented riprap scour-protection structure, **characterized by** comprising:
riprap particles (12), uniformly distributed around the periphery of a building structure (2); and
a gelling substance (13), partially filled into the interstitial space between the riprap particles (12) for connecting some of the riprap particles (12) into a large aggregate cluster from top to bottom to form cemented stalagmites (11), the gelling substance (13) is formed by a self-protection underwater cementing material, which flows through the void space of riprap stones and then adheres to the stone surface, deposits and fills into the small void space under self-weight; wherein
a plurality of the cemented stalagmites (11) are formed around the building structure (2) in a grid pattern, and each cemented stalagmite (11) has a structure with a smaller top and a larger bottom, wherein the cemented stalagmites (11) are formed by pouring an underwater cementing material, wherein the gaps between a plurality of the riprap particles (12) in the vertical direction are filled under the action of self-gravity of the underwater cementing material, and solidifying is performed to form integrated cemented stalagmites (11),
the grid pattern of the cemented stalagmites (11) is arranged in the following way: the periphery of a building structure (2) is divided into a plurality of grid units, and each grid unit has the cemented stalagmites (11) of different structures and the riprap particles (12) that are distributed between the cemented stalagmites (11), the cemented stalagmites (11) are arranged in at least two annular areas with the building structure (2) as a center, and a plurality of the cemented stalagmites (11) are distributed in each annular area.

2. The gridded cemented riprap scour-protection structure according to claim 1, **characterized in that** each cemented stalagmite (11) is of a frustum-like shape in which the porosity gradually decreases from top to bottom, or a gourd-like shape in which the porosity gradually decreases and then increases and then decreases from top to bottom.

3. The gridded cemented riprap scour-protection structure according to claim 1, **characterized in that** the number of the annular areas in the grid pattern is 2-5, and cemented stalagmites (11) arranged in two adjacent annular areas are staggered or continuously aligned.

4. The gridded cemented riprap scour-protection structure according to claim 1, **characterized in that** the distance between cemented stalagmites (11) in the annular area closer to the building structure (2) is less than or equal to the distance between cemented stalagmites (11) in the annular area which is farther away from the building structure (2).

5. The gridded cemented riprap scour-protection structure according to any one of claims 1-4, **characterized in that** 5%-30% of the void space of riprap stones is filled with the gelling substance (13) at the top section of the cemented stalagmites (11), and 60%-100% of the void space of riprap stones is filled with the gelling substance (13) at the bottom section of the cemented stalagmites (11).

6. The gridded cemented riprap scour-protection structure according to claim 5, **characterized in that** 30%-60% of the void space of riprap stones is filled with the gelling substance (13) at the middle part of the cemented stalagmites (11).

7. The gridded cemented riprap scour-protection structure according to any one of claims 1-6, **characterized in that** the size of riprap particles (12) is 50-500mm.

8. The gridded cemented riprap scour-protection structure according to claim 1, **characterized in that** the underwater cementing material is self-compacting early-strength concrete, underwater self-compacting early-strength mortar or underwater self-compacting early-strength paste.

9. A manufacturing method of gridded cemented riprap scour-protection structure, **characterized by** comprising:
firstly uniformly distributing riprap particles (12) around the periphery of a building structure (2), and then preparing cemented stalagmites (11) distributed around the building structure (2) in a grid pattern;
wherein the process of preparing the cemented stalagmites (11) is as follows: pouring an underwater cementing material, filling the gaps between a plurality of the riprap particles (12) in the vertical direction under the action of self-gravity of the underwater cementing material, and performing solidifying to form integrated cemented stalagmites (11); wherein the underwater cementing material is self-compacting early-strength concrete, underwater self-compacting early-strength mortar or underwater self-compacting early-strength paste; the fluidity and strength characteristics of the underwater cementing material are early-strength and retarding;
the size of the riprap particles (12) is 50-500 mm;
a gelling substance (13) is formed by the self-protection underwater cementing material, which flows through the void space of riprap stones and then adheres to the stone surface, deposits and fills into the small void space under self-weight;
the gelling substance (13) is configured to be filled into the interstitial space between the riprap particles (12) for connecting some of the riprap particles (12) into a large aggregate cluster from top to bottom to form cemented stalagmites (11);
a plurality of the cemented stalagmites (11) are formed around the building structure (2) in a grid pattern, and each cemented stalagmite (11) has a structure with a smaller top and a larger bottom, each cemented stalagmite (11) is surrounded by the riprap particles (12);
each cemented stalagmite (11) is of a frustum-like shape in which the porosity gradually decreases from top to bottom, or a gourd-like shape in which the porosity gradually decreases and then increases and then decreases from top to bottom;
the grid pattern of the cemented stalagmites (11) is arranged in the following way: the periphery of a building structure (2) is divided into a plurality of grid units, and each grid unit has the cemented stalagmites (11) of different structures and the riprap particles (12) that are distributed between the cemented stalagmites (11), the cemented stalagmites (11) are arranged in at least two annular areas with the building structure (2) as a center, and a plurality of the cemented stalagmites (11) are distributed in each annular area.

10. The manufacturing method of gridded cemented riprap scour-protection structure according to claim 9, **characterized in that**, the number of the annular areas in the grid pattern is 2-5, and cemented stalagmites (11) arranged in two adjacent annular areas are staggered or continuously aligned.

11. The manufacturing method of gridded cemented riprap scour-protection structure according to claim 9, **characterized in that**, the distance between cemented stalagmites (11) in the annular area closer to the building structure (2) is less than or equal to the distance between cemented stalagmites (11) in the annular area which is farther away from the building structure (2).

12. The manufacturing method of gridded cemented riprap scour-protection structure according to any one of claims 9-11, **characterized in that**, 5%-30% of the void space of riprap stones is filled with the gelling substance (13) at the top section of the cemented stalagmites (11), and 60%-100% of the void space of riprap stones is filled with the gelling substance (13) at the bottom section of the cemented stalagmites (11).

13. The manufacturing method of gridded cemented riprap scour-protection structure according to claim 12, **characterized in that**, 30%-60% of the void space of riprap stones is filled with the gelling substance (13) at the middle part of the cemented stalagmites (11).

## Patentansprüche

1. Gitterförmige, zementierte Steinschüttung zum Schutz vor Kolkbildung, **dadurch gekennzeichnet, dass** sie Folgendes umfasst:
Steinschüttungspartikel (12), die gleichmäßig um den Umfang einer Bauwerksstruktur (2) verteilt sind; undwobei eine Vielzahl der zementierten Stalagmiten; und
gelierende Substanz (13), die teilweise in den Zwischenraum zwischen den Steinschüttungspartikeln (12) eingebracht ist, um einige der Steinschüttungspartikel (12) zu einem großen Aggregatcluster von oben nach unten zu verbinden und zementierte Stalagmiten (11) zu bilden, wobei die gelierende Substanz (13) aus einem selbstschützenden Unterwasser-Zementierungsmaterial gebildet ist, das durch den Hohlraum der Steinschüttung fließt, anschließend an der Steinoberfläche haftet, sich ablagert und unter Eigengewicht die kleinen Hohlräume ausfüllt
wobei eine Vielzahl der zementierten Stalagmiten (11) in einem Gittermuster um die Bauwerksstruktur (2) angeordnet ist, und jeder zementierte Stalagmit (11) eine Struktur mit kleinerem oberen und größerem unteren Abschnitt aufweist, wobei die zementierten Stalagmiten (11) durch das Eingießen eines Unterwasser-Zementierungsmaterials gebildet sind, wobei die Lücken zwischen einer Vielzahl der Steinschüttungspartikel (12) in vertikaler Richtung unter Einwirkung der Eigengravitation des Unterwasser-Zementierungsmaterials ausgefüllt und anschließend verfestigt werden, um integrierte zementierte Stalagmiten (11) zu bilden,
wobei das Gittermuster der zementierten Stalagmiten (11) wie folgt angeordnet ist: Der Umfang einer Bauwerksstruktur (2) ist in eine Vielzahl von Gittereinheiten unterteilt, und jede Gittereinheit weist zementierte Stalagmiten (11) unterschiedlicher Struktur sowie zwischen den zementierten Stalagmiten (11) verteilte Steinschüttungspartikel (12) auf, wobei die zementierten Stalagmiten (11) in mindestens zwei ringförmigen Bereichen mit der Bauwerksstruktur (2) als Zentrum angeordnet sind und eine Vielzahl der zementierten Stalagmiten (11) in jedem ringförmigen Bereich verteilt ist.

2. Gitterförmige, zementierte Steinschüttung zum Schutz vor Kolkbildung nach Anspruch 1, **dadurch gekennzeichnet, dass** jeder zementierte Stalagmit (11) eine kegelstumpfförmige Gestalt aufweist, bei der die Porosität von oben nach unten allmählich abnimmt, oder eine kürbisförmige Gestalt, bei der die Porosität von oben nach unten zunächst abnimmt, dann zunimmt und anschließend wieder abnimmt.

3. Gitterförmige, zementierte Steinschüttung zum Schutz vor Kolkbildung nach Anspruch 1, **dadurch gekennzeichnet, dass** die Anzahl der ringförmigen Bereiche im Gittermuster 2 bis 5 beträgt und dass die in zwei benachbarten ringförmigen Bereichen angeordneten zementierten Stalagmiten (11) versetzt oder fortlaufend ausgerichtet sind.

4. Gitterförmige, zementierte Steinschüttung zum Schutz vor Kolkbildung nach Anspruch 1, **dadurch gekennzeichnet, dass** der Abstand zwischen zementierten Stalagmiten (11) in dem der Bauwerksstruktur (2) näher gelegenen ringförmigen Bereich kleiner oder gleich dem Abstand zwischen zementierten Stalagmiten (11) in dem weiter von der Bauwerksstruktur (2) entfernten ringförmigen Bereich ist.

5. Gitterförmige, zementierte Steinschüttung zum Schutz vor Kolkbildung nach einem der Ansprüche 1 bis 4, **dadurch gekennzeichnet, dass** im oberen Abschnitt der zementierten Stalagmiten (11) 5 % bis 30 % des Hohlraums der Steinschüttung mit der gelierenden Substanz (13) gefüllt sind und im unteren Abschnitt 60 % bis 100 % des Hohlraums der Steinschüttung mit der gelierenden Substanz (13) gefüllt sind.

6. Gitterförmige, zementierte Steinschüttung zum Schutz vor Kolkbildung nach Anspruch 5, **dadurch gekennzeichnet, dass** im mittleren Abschnitt der zementierten Stalagmiten (11) 30 % bis 60 % des Hohlraums der Steinschüttung mit der gelierenden Substanz (13) gefüllt sind.

7. Gitterförmige, zementierte Steinschüttung zum Schutz vor Kolkbildung nach einem der Ansprüche 1 bis 6, **dadurch gekennzeichnet, dass** die Größe der Steinschüttungspartikel (12) 50 mm bis 500 mm beträgt.

8. Gitterförmige, zementierte Steinschüttung zum Schutz vor Kolkbildung nach Anspruch 1, **dadurch gekennzeichnet, dass** das Unterwasser-Zementierungsmaterial selbstverdichtender Unterwasser-Frühfestbeton, selbstverdichtender Unterwasser-Frühmörtel oder selbstverdichtende Unterwasser-Frühpaste ist.

9. Herstellungsverfahren für eine gitterförmige, zementierte Steinschüttung zum Schutz vor Kolkbildung, **dadurch gekennzeichnet, dass** es Folgendes umfasst:
zunächst gleichmäßiges Verteilen von Steinschüttungspartikeln (12) um den Umfang einer Bauwerksstruktur (2); undanschließend Herstellen von zementierten Stalagmiten (11), die in einem Gittermuster um die Bauwerksstruktur (2) verteilt sind;
wobei der Prozess zur Herstellung der zementierten Stalagmiten (11) Folgendes umfasst: Eingießen eines Unterwasser-Zementierungsmaterials, Füllen der Lücken zwischen einer Vielzahl der Steinschüttungspartikel (12) in vertikaler Richtung unter Einwirkung der Eigengravitation des Unterwasser-Zementierungsmaterials und anschließendes Verfestigen zur Bildung integrierter zementierter Stalagmiten (11); wobei das Unterwasser-Zementierungsmaterial selbstverdichtender Frühfestbeton, selbstverdichtender Unterwasser-Frühmörtel oder selbstverdichtende Unterwasser-Frühpaste ist und die Fließ- und Festigkeitseigenschaften des Unterwasser-Zementierungsmaterials durch Frühfestigkeit und Verzögerung gekennzeichnet sind;
wobei die Größe der Steinschüttungspartikel (12) 50 mm bis 500 mm beträgt;
wobei eine gelierende Substanz (13) durch das selbstschützende Unterwasser-Zementierungsmaterial gebildet ist, das durch den Hohlraum der Steinschüttung fließt, anschließend an der Steinoberfläche haftet, sich ablagert und unter Eigengewicht die kleinen Hohlräume ausfüllt;
wobei die gelierende Substanz (13) dazu eingerichtet ist, in den Zwischenraum zwischen den Steinschüttungspartikeln (12) eingebracht zu werden, um einige der Steinschüttungspartikel (12) zu einem großen Aggregatcluster von oben nach unten zu verbinden und zementierte Stalagmiten (11) zu bilden;
wobei eine Vielzahl der zementierten Stalagmiten (11) in einem Gittermuster um die Bauwerksstruktur (2) angeordnet ist und jeder zementierte Stalagmit (11) eine Struktur mit kleinerem oberen und größerem unteren Abschnitt aufweist, wobei jeder zementierte Stalagmit (11) von Steinschüttungspartikeln (12) umgeben ist;
wobei jeder zementierte Stalagmit (11) eine kegelstumpfförmige Gestalt aufweist, bei der die Porosität von oben nach unten allmählich abnimmt, oder eine kürbisförmige Gestalt, bei der die Porosität von oben nach unten zunächst abnimmt, dann zunimmt und anschließend wieder abnimmt;
wobei das Gittermuster der zementierten Stalagmiten (11) wie folgt angeordnet ist: Der Umfang einer Bauwerksstruktur (2) ist in eine Vielzahl von Gittereinheiten unterteilt, und jede Gittereinheit weist zementierte Stalagmiten (11) unterschiedlicher Struktur sowie zwischen den zementierten Stalagmiten (11) verteilte Steinschüttungspartikel (12) auf, wobei die zementierten Stalagmiten (11) in mindestens zwei ringförmigen Bereichen mit der Bauwerksstruktur (2) als Zentrum angeordnet sind und eine Vielzahl der zementierten Stalagmiten (11) in jedem ringförmigen Bereich verteilt ist.

10. Herstellungsverfahren nach Anspruch 9, **dadurch gekennzeichnet, dass** die Anzahl der ringförmigen Bereiche im Gittermuster 2 bis 5 beträgt und dass die in zwei benachbarten ringförmigen Bereichen angeordneten zementierten Stalagmiten (11) versetzt oder fortlaufend ausgerichtet sind.

11. Herstellungsverfahren nach Anspruch 9, **dadurch gekennzeichnet, dass** der Abstand zwischen zementierten Stalagmiten (11) in dem der Bauwerksstruktur (2) näher gelegenen ringförmigen Bereich kleiner oder gleich dem Abstand zwischen zementierten Stalagmiten (11) in dem weiter von der Bauwerksstruktur (2) entfernten ringförmigen Bereich ist.

12. Herstellungsverfahren nach einem der Ansprüche 9 bis 11, **dadurch gekennzeichnet, dass** im oberen Abschnitt der zementierten Stalagmiten (11) 5 % bis 30 % des Hohlraums der Steinschüttung mit der gelierenden Substanz (13) gefüllt sind und im unteren Abschnitt 60 % bis 100 % des Hohlraums der Steinschüttung mit der gelierenden Substanz (13) gefüllt sind.

13. Herstellungsverfahren nach Anspruch 12, **dadurch gekennzeichnet, dass** im mittleren Abschnitt der zementierten Stalagmiten (11) 30 % bis 60 % des Hohlraums der Steinschüttung mit der gelierenden Substanz (13) gefüllt sind.

## Revendications

1. Structure de protection contre l'affouillement en enrochements cimentés en grille, **caractérisée en ce qu'**elle comprend :
des particules d'enrochement (12), réparties uniformément autour de la périphérie d'une structure de bâtiment (2) ; et
une substance gélifiante (13), partiellement introduite dans l'espace interstitiel entre les particules d'enrochement (12) pour relier certaines des particules d'enrochement (12) en un grand amas d'agrégats de haut en bas afin de former des stalagmites cimentées (11), la substance gélifiante (13) est formée par un matériau de cimentation sous-marin auto-protecteur, qui s'écoule à travers l'espace vide de pierres d'enrochement puis adhère à la surface de pierre, se dépose et remplit le petit espace vide sous son propre poids ; dans laquelle
une pluralité de stalagmites cimentées (11) sont formées autour de la structure de bâtiment (2) selon un motif de grillage, et chaque stalagmite cimentée (11) présente une structure avec une partie supérieure plus petite et une partie inférieure plus grande, dans laquelle les stalagmites cimentées (11) sont formées par coulage d'un matériau de cimentation sous-marin, dans laquelle les espaces entre une pluralité de particules d'enrochement (12) dans la direction verticale sont remplis sous l'action de l'auto-gravité du matériau de cimentation sous-marin, et la solidification est réalisée afin de former des stalagmites cimentées (11) intégrées,
le motif de grillage des stalagmites cimentées (11) est disposé de la manière suivante : la périphérie d'une structure de bâtiment (2) est divisée en une pluralité d'unités de grille, et chaque unité de grille présente les stalagmites cimentées (11) de différentes structures et les particules d'enrochement (12) qui sont réparties entre les stalagmites cimentées (11), les stalagmites cimentées (11) sont disposées dans au moins deux zones annulaires avec la structure de bâtiment (2) comme centre, et une pluralité des stalagmites cimentées (11) sont réparties dans chaque zone annulaire.

2. Structure de protection contre l'affouillement en enrochements cimentés en grille selon la revendication 1, **caractérisée en ce que** chaque stalagmite cimentée (11) est de forme tronconique dans laquelle la porosité diminue progressivement de haut en bas, ou de forme de courge dans laquelle la porosité diminue progressivement puis augmente puis diminue de haut en bas.

3. Structure de protection contre l'affouillement en enrochements cimentés en grille selon la revendication 1, **caractérisée en ce que** le nombre de zones annulaires dans le motif de grillage est de 2 à 5, et des stalagmites cimentées (11) disposées dans deux zones annulaires adjacentes sont décalées ou alignées en continu.

4. Structure de protection contre l'affouillement en enrochements cimentés en grille selon la revendication 1, **caractérisée en ce que** la distance entre des stalagmites cimentées (11) dans la zone annulaire la plus proche de la structure de bâtiment (2) est inférieure ou égale à la distance entre des stalagmites cimentées (11) dans la zone annulaire la plus éloignée de la structure de bâtiment (2).

5. Structure de protection contre l'affouillement en enrochements cimentés en grille selon l'une quelconque des revendications 1 à 4, **caractérisée en ce que** 5 % à 30 % de l'espace vide de pierres d'enrochement est rempli de la substance gélifiante (13) au niveau de la section supérieure des stalagmites cimentées (11), et 60 % à 100 % de l'espace vide de pierres d'enrochement est rempli de la substance gélifiante (13) au niveau de la section inférieure des stalagmites cimentées (11).

6. Structure de protection contre l'affouillement en enrochements cimentés en grille selon la revendication 5, **caractérisée en ce que** 30 % à 60 % de l'espace vide de pierres d'enrochement est rempli de la substance gélifiante (13) au niveau de la partie centrale des stalagmites cimentées (11).

7. Structure de protection contre l'affouillement en enrochements cimentés en grille selon l'une quelconque des revendications 1 à 6, **caractérisée en ce que** la taille de particules d'enrochement (12) est de 50 à 500 mm.

8. Structure de protection contre l'affouillement en enrochements cimentés en grille selon la revendication 1, **caractérisée en ce que** le matériau de cimentation sous-marin est un béton autoplaçant de haute résistance initiale, un mortier autoplaçant sous-marin de haute résistance initiale ou une pâte autoplaçante sous-marine de haute résistance initiale.

9. Procédé de fabrication d'une structure de protection contre l'affouillement en enrochements cimentés en grille, **caractérisé en ce qu'**il comprend :
premièrement, la répartition uniforme de particules d'enrochement (12) autour de la périphérie d'une structure de bâtiment (2), et puis la préparation de stalagmites cimentées (11) réparties autour de la structure de bâtiment (2) selon un motif de grillage ;
dans lequel le processus de préparation des stalagmites cimentées (11) est le suivant : couler un matériau de cimentation sous-marin, remplir les espaces entre une pluralité de particules d'enrochement (12) dans la direction verticale sous l'action de l'auto-gravité du matériau de cimentation sous-marin, et effectuer une solidification afin de former des stalagmites cimentées (11) intégrées ; dans lequel le matériau de cimentation sous-marin est un béton autoplaçant de haute résistance initiale, un mortier autoplaçant sous-marin de haute résistance initiale ou une pâte autoplaçante sous-marine de haute résistance initiale ; les caractéristiques de fluidité et de résistance du matériau de cimentation sous-marin sont la résistance initiale et le retard ;
la taille des particules d'enrochement (12) est de 50 à 500 mm ;
une substance gélifiante (13) est formée par le matériau de cimentation sous-marin auto-protecteur, qui s'écoule à travers l'espace vide de pierres d'enrochement puis adhère à la surface de pierre, se dépose et remplit le petit espace vide sous son propre poids ;
la substance gélifiante (13) est conçue pour être introduite dans l'espace interstitiel entre les particules d'enrochement (12) pour relier certaines des particules d'enrochement (12) en un grand amas d'agrégats de haut en bas afin de former des stalagmites cimentées (11) ;
une pluralité de stalagmites cimentées (11) sont formées autour de la structure de bâtiment (2) selon un motif de grillage, et chaque stalagmite cimentée (11) présente une structure avec une partie supérieure plus petite et une partie inférieure plus grande, chaque stalagmite cimentée (11) est entourée des particules d'enrochement (12) ;
chaque stalagmite cimentée (11) est de forme tronconique dans laquelle la porosité diminue progressivement de haut en bas, ou de forme de courge dans laquelle la porosité diminue progressivement puis augmente puis diminue de haut en bas ;
le motif de grillage des stalagmites cimentées (11) est disposé de la manière suivante : la périphérie d'une structure de bâtiment (2) est divisée en une pluralité d'unités de grille, et chaque unité de grille présente les stalagmites cimentées (11) de différentes structures et les particules d'enrochement (12) qui sont réparties entre les stalagmites cimentées (11), les stalagmites cimentées (11) sont disposées dans au moins deux zones annulaires avec la structure de bâtiment (2) comme centre, et une pluralité des stalagmites cimentées (11) sont réparties dans chaque zone annulaire.

10. Procédé de fabrication d'une structure de protection contre l'affouillement en enrochements cimentés en grille selon la revendication 9, **caractérisé en ce que** le nombre de zones annulaires dans le motif de grillage est de 2 à 5, et des stalagmites cimentées (11) disposées dans deux zones annulaires adjacentes sont décalées ou alignées en continu.

11. Procédé de fabrication d'une structure de protection contre l'affouillement en enrochements cimentés en grille selon la revendication 9, **caractérisé en ce que** la distance entre des stalagmites cimentées (11) dans la zone annulaire la plus proche de la structure de bâtiment (2) est inférieure ou égale à la distance entre des stalagmites cimentées (11) dans la zone annulaire la plus éloignée de la structure de bâtiment (2).

12. Procédé de fabrication d'une structure de protection contre l'affouillement en enrochements cimentés en grille selon l'une quelconque des revendications 9 à 11, **caractérisé en ce que** 5 % à 30 % de l'espace vide de pierres d'enrochement est rempli de la substance gélifiante (13) au niveau de la section supérieure des stalagmites cimentées (11), et 60 % à 100 % de l'espace vide de pierres d'enrochement est rempli de la substance gélifiante (13) au niveau de la section inférieure des stalagmites cimentées (11).

13. Procédé de fabrication d'une structure de protection contre l'affouillement en enrochements cimentés en grille selon la revendication 12, **caractérisé en ce que** 30 % à 60 % de l'espace vide de pierres d'enrochement est rempli de la substance gélifiante (13) au niveau de la partie centrale des stalagmites cimentées (11).
